Europäisches Patentamt

European Patent Office

Office européen des brevets

(19)

(11) Veröffentlichungsnummer: **0 329 820 B1**

(12) # EUROPÄISCHE PATENTSCHRIFT

(45) Veröffentlichungstag der Patentschrift: **21.10.92**

(21) Anmeldenummer: **88113191.6**

(22) Anmeldetag: **13.08.88**

(51) Int. Cl.⁵: **C10G 1/02**, C10B 53/00

(54) Verfahren und Vorrichtung zur Behandlung von Abfallmaterial.

(30) Priorität: **23.01.88 EP 88100995**

(43) Veröffentlichungstag der Anmeldung:
**30.08.89 Patentblatt 89/35**

(45) Bekanntmachung des Hinweises auf die
Patenterteilung:
**21.10.92 Patentblatt 92/43**

(84) Benannte Vertragsstaaten:
**AT BE CH DE FR GB IT LI NL SE**

(56) Entgegenhaltungen:
**AU-A- 119 700**
**DE-A- 3 042 964**
**DE-A- 3 605 638**
**US-A- 1 674 420**

(73) Patentinhaber: **Alfred Bolz GmbH & Co. KG**
**Isnyer Strasse 76**
**W-7988 Wangen/Allg.(DE)**

(72) Erfinder: **Bolz, Alfred**
**Uhlandweg 25**
**W-7988 Wangen im Allgäu(DE)**
Erfinder: **Boos, Günther**
**Stephanusstrasse 2**
**W-7989 Argenbühl 1(DE)**

(74) Vertreter: **Riebling, Peter, Dr.-Ing., Patentan-**
**walt**
**Rennerle 10, Postfach 31 60**
**W-8990 Lindau/B.(DE)**

## Beschreibung

Die Erfindung betrifft ein Verfahren zur Behandlung von Abfallmaterial durch Erhitzen, insbesondere zur Gewinnung von Brennstoffen aus organischem Material, das zur Bildung von Kohle und gasförmigen, teilweise durch Abkühlen verflüssigbaren Reaktionsprodukten unter Luftausschluß auf eine zwischen 200° C und 600° C liegende Konvertierungstemperatur erhitzt wird, und auf eine Vorrichtung zur Durchführung dieses Verfahrens.

Die Mengen an organischen und anorganischen Abfällen der Industrie und der Haushalte werden von Jahr zu Jahr größer. Eine ordungsgemäße Entsorgung wird immer dringender. Von Fachleuten wird prophezeit, daß die Aufwendungen hierfür in einigen Jahrzehnten Ausmaße annehmen werden, die denen der heutigen öffentlichen Haushalte von Schulwesen und Straßenbau entsprechen. Hinzu kommt noch, daß die natürlichen Vorräte an Grundstoffen immer weniger werden, auf der anderen Seite jedoch die Abfälle eine Vielzahl wiederverwertbare Rohstoffe enthalten. Das gilt bereits für den Müll, jedoch in besonders großem Maße für den kompostierten Müll, wie etwa Klärschlamm, oder die reinen biologischen Abfälle, wie beispielsweise vernichtete Agrarprodukte der landwirtschaftlichen Überschußproduktion; auch Trester von Weintrauben der Weinkellereien oder von Abfallprodukten der Brauereien zählen hierzu.

Aus dieser Erkenntnis heraus wurden bereits zahlreiche Methoden erarbeitet, um die wertvollen Rohstoffe aus dem organischen Abfall zurückzugewinnen. So ist es beispielsweise bekannt, daß trockener Klärschlamm durch Erhitzen unter Luftausschluß in Kohle, Öl, brennbare sowie nichtbrennbare Gase und Reaktionswasser zerlegt werden kann.

In DE-A-30 42 964 wird ein Verfahren zur Umwandlung von biologischem Material zu festen und flüssigen Brennstoffen beschrieben. Die Biomasse durchläuft hierbei einen zeitabhängigen Temperaturgradienten zwischen 200° bis 500° C. Dieser zeitabhängige Temperaturgradient ist allerdings in dieser Veröffentlichung nicht angegeben, - wohl deshalb nicht, weil er je nach verwendetem biologischem Ausgangsmaterial unterschiedlich ist.

In EP-A- 0 052 334 wird ein kontinuierliches Verfahren erwähnt, bei dem das trockene Ausgansmaterial, z.B. körniger oder pulverisierter Klärschlamm, mittels einer Förderschnecke durch ein beheiztes Reaktionsrohr transportiert wird, wobei als "Konvertierungsprozeßdauer" 2 bis 3 Stunden und Aufheizgeschwindigkeiten von 5°C bis 30°C pro Minute angegeben sind.

In DE-A-36 05 638 wird eine Vorrichtung zur Gaserzeugung aus Biomasse beschrieben, bei welcher das Ausgangsmaterial einer konischen Drehtrommel als Zentrifuge über seinen Eingangsbereich mit einem kleinen Durchmesser zugeführt von der nachfolgenden Biomasse zum Ausgangsbereich geschoben wird. Gleichzeitig wird durch die Luftzuführung im Ausgangsbereich ein Pyrolyseprozeß in Gang gesetzt, welcher Schwelgas erzeugt.

In "Korrespondenz Abwasser" Heft 6/1982 S. 377 - 381 sind die folgenden vier kontinuierlichen Apparaturen zur Umwandlung von Biomasse zu Öl beschrieben

- Ofen mit Transportschnecke
- Drehrohrofen
- Ofen mit Transportband
- Schachtofen.

Alle diese Anlagen haben gemeinsam, daß die zu behandelnde Biomasse nur einen einzigen Prozeßraum kontinuierlich durchläuft; sie unterscheiden sich im wesentlichen lediglich durch ihre verschiedenartigen Transportmechanismen. Im gesamten Prozeßraum herrschen dieselben Druckverhältnisse. In der Praxis wird ein leichter Überdruck aufrechterhalten, welcher gerade so groß ist, daß die Schwelgase aus dem Prozeßraum verdrängt und nach außen abgeführt werden. Die Transportgeschwindigkeit ist nur einheitlich veränderlich. Die Entgasung der Biomasse kann somit lediglich durch Änderung der Durchlaufzeit und der Temperatur beeinflußt werden.

Aus US-A-1 674 420 ist ein Verfahren zum Destillieren von festem kohlenstoffhaltigen Material, insbesondere zum Gewinnen von Öl aus Ölschiefer, bekannt. Die Anlage besitzt zwei abwechselnd zu beschickende Vorheiz-Behälter, einen gemeinsamen Hauptbehandlungsbehälter und zwei abwechselnd beschickbare Kühlbehälter, deren Füllund Entleeröffnungen absperrbar sind. Das Kühlen erfolgt mit Sattdampf, das Vorheizen und Behandeln mit überhitztem Dampf, welcher Dampf jeweils durch die Behälter hindurchgeleitet wird. Mit dem Dampf werden die zu gewinnenden Bestandteile (Gas, Öl) abgeführt, der über eine Turbine wieder entspannt und dann in einen Kondensator geleitet wird.

Der Erfindung liegt die Aufgabe zugrunde, bei einem Verfahren und einer Vorrichtung der eingangs beschriebenen Art die Wirtschaftlichkeit zu erhöhen.

Die Lösung besteht in einem Verfahren zur Behandlung von Abfallmaterial durch Erhitzen, insbesondere zur Gewinnung von Brennstoffen aus organischem Material, das zur Bildung von Kohle und gasförmigen, teilweise durch Abkühlen verflüssigbaren Reaktionsprodukten unter Luftausschluß auf eine zwischen 200° C und 600° C liegende Konvertierungstemperatur erhitzt wird, wobei das Material nacheinander mehrere Teilprozesse durchläuft, von denen ein erster Teilprozeß die Aufwärmung, ein zweiter die Trocknung und ein dritter die Konvertierung des Materials bewirkt, wobei nacheinander zu durchlaufende Teilprozesse gleichzeitig in voneinander abgeschlossenen Kammern mit teilprozeß-eigenen Behandlungsparametern, wie Temperatur, Druck oder Mischgeschwindigkeit, durchgeführt werden, und wobei der Betriebsdruck im ersten Teilprozeß über und im zweiten Teilprozeß unter dem Verdampfungsdruck bei der zugehörigen Materialtemperatur gehalten wird.

Bei diesem Vorgehen kann jeder Teilprozeß für sich gesteuert und optimiert werden. Die Entgasung kann nicht nur durch Wahl der Temperatur und der Verweildauer, sondern auch durch Wahl anderer Behandlungsparamter, wie Betriebsdruck oder Mischgeschwindigkeit, beeinflußt werden. Je geringer der Druck und je stärker die Auflockerung des Abfallmaterials durch höhere Mischgeschwindigkeit, um so schneller erfolgt das Ausgasen. Insgesamt läßt sich daher unter sonst gleichen Voraussetzungen eine höhere Ausbeute pro Zeiteinheit als bei kontinuierlichem Betrieb in einem einzigen Prozeßraum erzielen. Dies führt zu einer Steigerung der Wirtschaftlichkeit.

Die Behandlung in mehreren Teilprozessen hat den weiteren Vorteil, daß die bei einer Konvertierung austretenden Gase unabhängig von dem in einer früheren Stufe ausgetretenen Wasserdampf erfaßt werden können, sich also aufwendige Trennvorrichtungen erübrigen.

Die Trennung zwischen erstem und zweitem Teilprozeß ermöglicht es, die Wärmezufuhr für die Aufwärmung des Materials und gegebenenfalls eine damit verbundene Vortrocknung, die noch bei verhältnismäßig niedriger Temperatur erfolgen muß, einerseits und für die Resttrocknung andererseits sinnvoll aufzuteilen. Die Abtrennung des dritten Teilprozesses ermöglicht es, den bei der Trocknung austretenden Wasserdampf einerseits und die bei der Konvertierung auftretenden Gase andererseits getrennt zu erfassen, so daß ein entsprechender Trennungs-Arbeitsgang entfällt. Während im ersten Teilprozeß die Dampfbildung unterdrückt ist, wird sie im zweiten Teilprozeß unterstützt. Nahezu der gesamte nicht vom Reaktionswasser stammende Wasserdampf tritt daher im zweiten Teilprozeß aus und kann entsprechend erfaßt werden. Hierdurch wird auch die Zeit für die Trocknungsphase ganz erheblich verkürzt und eine sehr wirtschaftliche Trocknung erreicht.

Wenn das Material chargenweise behandelt wird und jede Charge nacheinander mehrere Teilprozesse durchläuft, wobei die Teilprozesse für aufeinanderfolgende Chargen gleichzeitig durchgeführt werden, ergibt sich für aufeinanderfolgende Chargen ein quasi-kontinuierlicher Betrieb. Die im Chargenbetrieb arbeitende Anlage läßt sich auch kleiner ausführen als eine kontinuierlich arbeitende Anlage, weil die Masse dichter aufeinanderliegt und die erforderliche Verweildauer unabhängig von der Länge der Prozeßstrecke ist. Soweit bei der Chargenbehandlung ein Durchmischen erforderlich ist, läßt es sich mit relativ einfachen, auch bei hohen Temperaturen unanfälligen Vorrichtungen bewirken.

Konstruktiv besteht die Lösung in einer Vorrichtung zur Behandlung von Abfallmaterial durch Erhitzen mit mindestens zwei mit absperrbaren Füll- und Entleeröffnungen versehenen Behältern, die für die gleichzeitige Durchführung unterschiedlicher Teilprozesse ausgelegt sind, wobei zumindest die der Erhitzung dienenden Behälter konisch mit nach unten kleiner werdenden Durchmesser ausgeführt sind und der konische Teil außen mit einer Heizvorrichtung und innen mit einer um ihre Mittelachse drehbaren Mischvorrichtung versehen ist.

Die absperrbaren Behälter können vakuumfest und druckdicht ausgeführt werden. Der Betriebsdruck läßt sich daher innerhalb eines weiten Rahmens, beispielsweise zwischen 0,5 und 3,0 bar ändern. Es tritt auch keine Geruchsbelästigung auf. Die Verwendung mehrerer Behälter erlaubt auch eine Anpassung der Behältergröße an das sich ändernde Volumen einer Charge, so daß die Gesamtabmessungen der Vorrichtung noch weiter verkleinert werden können. Da die einzelnen Behälter auf unterschiedlichem Temperaturniveau arbeiten, lassen sich - wie später noch näher erläutert wird - wärmetechnische Verknüpfungen vornehmen, die zu einer weiteren Verbesserung der Wirtschaftlichkeit führen. Rotationsmischvorrichtungen sind einfach und robust. Sie bewirken sowohl eine Durchmischung als auch eine Auflockerung des Materials. In Verbindung mit der Außenheizung der Konuswand ergibt sich eine sehr intensive und trotzdem gleichmäßige Erhitzung.

Besonders vorteilhaft ist es, daß zumindest ein Behandlungsparameter während wenigstens eines Teilprozesses geändert wird. Diese zeitliche Änderung des Behandlungsparameters erlaubt eine sehr genaue Anpassung an die augenblicklichen Erfordernisse. Auf diese Weise läßt sich der Energiebedarf kleinhalten. Beispielsweise kann man durch Änderung der Mischgeschwindigkeit beim Trocknungsprozeß berücksichtigen, daß das Material zuerst klumpig und später locker ist.

Sehr günstig ist es, daß die Behandlungsparamter für den Teilprozeß, bei dem das Material die größte Wärmemenge aufzunehmen hat, so gewählt sind, daß dessen Teilprozeßdauer im Bereich den Minimums liegt. Auf diese Weise wird das Verfahren an der zeitaufwendigsten Stelle optimiert und damit die gesamte Prozeßdauer verkürzt. Eine geforderte Ausbeute wird daher bei kurzer Prozeßdauer erzielt.

Insbesondere können die Behandlungsparameter so gewählt sein, daß die erforderliche Verweildauer für eine Charge in jedem ihrer Teilprozesse annähernd gleich ist. Jeder Teilprozeß erfordert daher die gleiche Taktzeit, so daß die Chargen die Teilprozesse in einem vorgegebenen Takt durchlaufen.

Beispielsweise kann das Material beim ersten Teilprozeß bei einem etwas über dem Atmosphärendruck liegenden Betriebsdruck auf eine etwas über 100° C liegende Temperatur erwärmt und im zweiten Teilprozeß bei einem unter dem Atmosphärendruck liegenden Betriebsdruck auf einer Temperatur in einem Bereich um 100° C gehalten werden. Der erstgenannte Bereich erstreckt sich etwa von 105 bis 130° C, der zweitgenannte Bereich etwa von 90 bis 115° C.

Wirtschaftlich nützlich ist es, daß die Beheizung in mindestens einem Teilprozeß unter Verwendung des im Trocknungs-Teilprozeß gewonnen Wasserdampfes erfolgt. Auf diese Weise wird der Wärmeinhalt des Wasserdampfes genutzt und nur wenig zusätzliche Wärme benötigt.

Desweiteren ist es empfehlenswert, daß aus dem Konvertierungs-Teilprozeß gewonnene brennbare Gase verbrannt werden und die Beheizung im Konvertierungs-Teilprozeß unter Verwendung der Verbrennungswärme erfolgt. Die auf diese Weise wieder in den Prozeß eingeführte Energie ist nur ein kleiner Teil der als Kohle oder Öl gewonnenen Energie.

Insbesondere kann ein Wärmeträger durch die Verbrennungswärme beheizt werden und dieser im Anschluß an die Wärmeabgabe im Konvertierungs-Teilprozeß das Material in mindestens einem vorangehenden Teilprozeß beheizen und/oder den Wasserdampf überhitzen. Durch diese zusätzliche Ausnutzung wird weitere Wärmeenergie gespart.

Günstig ist es, daß an den Konvertierungs-Teilprozeß ein Kühl-Teilprozeß anschließt, in dem die Kohle unter Luftausschluß auf eine unter der Zündtemperatur liegende Temperatur abgekühlt wird. Dieser Kühl-Teilprozeß sorgt dafür, daß die gewonnene Kohle erst dann mit Luft in Berührung kommt, wenn keine Zündgefahr mehr besteht.

Hierbei kann die Kühlung im Kühl-Teilprozeß mittels eines Wärmeträgers erfolgen, der zuvor das Material im ersten Teilprozeß beheizt hat. Auch dies gibt eine günstige Wärmeenergie-Bilanz.

Desweiteren ist es von Interesse, daß aus dem Konvertierungs-Teilprozeß gewonnenes Inertgas in mindestens einem Teilprozeß verwendet wird, um diesen frei von Sauerstoff durchzuführen. Als Inertgas dient insbesondere $CO_2$. Beipielsweise für den Kühl-Teilprozeß kann der zugehörige Behälter mit Inertgas gefüllt werden, damit die Abkühlung unter Abschluß von Sauerstoff erfolgen kann.

Besonders günstig es, daß mindestens zwei aufeinanderfolgende Teilprozesse in derselben Kammer durchgeführt werden, wobei der Übergang durch Umsteuerung der Behandlungsparameter folgt. Da hierbei ein Umfüllen der Charge entfällt, ergibt sich ein entsprechender Zeitgewinn.

In konstruktiver Hinsicht empfiehlt es sich, daß mindestens zwei Behälter in Reihe geschaltet sind. Diese Behälter können dann jeweils für bestimmte Teilprozesse ausgelegt sein. Dies kann sich auf das Volumen, die Größe der Heizfläche oder irgendein anderes Maß beziehen.

Das Umfüllen ist auf einfach Weise möglich, wenn die Entleeröffnung eines oberen Behälters sich über der Füllöffnung des nachfolgenden Behälters befindet.

Als besonders vorteilhaft hat sich erwiesen, daß vier Behälter für vier Teilprozesse, nämlich für das Aufwärmen bzw. Vortrocknen, für das Trocknen, für das Konvertieren und für das Kühlen, vorgesehen sind. Die vier Teilprozesse können daher gleichzeitig ablaufen, was zu einem erwünschten quasikontinuierlichen Betrieb führt. Hierbei ist jeder Behälter auf die optimale Arbeitsweise eingestellt.

Bei einer Ausführungsform sind alle vier Behälter in Reihe geschaltet. Die Materialcharge wird jeweils nach Abschluß eines Teilprozesses in den nächsten Behälter geleitet.

Bei einer anderen Ausführungsform ist mindestens ein Kombinationsbehälter für die Durchführung von mindestens zwei Teilprozessen vorgesehen, dem Steuereinrichtungen zur Änderung der Heiztemperatur und/oder des Betriebsdrucks und/oder der Mischgeschwindigkeit zugeordnet sind. Ein solcher Kombinationsbehälter erlaubt es, mehrere Teilprozesse durchzuführen, ohne daß ein Umladen des Materials erforderlich ist. Dies führt zu einer entsprechenden Zeitersparnis.

Mit Vorteil sind mehrere gleichartige Kombinationsbehälter zueinander parallel geschaltet und ihre Steuereinrichtungen für eine zyklisch wechselnde Durchführung der Teilprozesse ausgelegt. Solche Kombinationsbehälter können gleichzeitig, aber mit unterschiedlichen Teilprozessen betrieben werden.

So können drei Kombinationsbehälter für die zyklisch wechselnde Durchführung der drei ersten Teilprozesse zueinander parallel geschaltet sein und mit einem Behälter für den Kühl-Teilprozeß in Reihe liegen. Dies erlaubt es, drei Heiz-Teilprozesse mit unterschiedlicher Dauer, aber jeweils auf die minimale Verweilzeit berechnet, durchzuführen, wobei die Verweilzeit im Kühl-Teilprozeß einem Drittel der Summe der Verweilzeiten in den drei ersten Teilprozessen entspricht.

Eine andere Möglichkeit besteht darin, daß zwei Kombinationsbehälter für die abwechselnde Durchführung der zwei ersten Teilprozesse zueinander parallel geschaltet sind und mit der Reihenschaltung eines Behälters für den Konvertierungs-Teilprozeß und eines Behälters für den Kühl-Teilprozeß in Reihe liegen. Hier können die Summen der Verweilzeiten in dem ersten und zweiten Teilprozeß der Verweilzeit im dritten Teilprozeß und im Kühl-Teilprozeß angepaßt werden. Für jede Charge ist nur ein Umfüllvorgang vorgesehen, was einen erheblichen Zeitgewinn darstellt. Außerdem ist es nicht erforderlich, vor dem Kühl-Teilprozeß den der Kühlung dienenden Behälter von Luft zu befreien.

Besonders bevorzugt wird es, daß zwei Reihenschaltungen, die je einen Kombinationsbehälter für die zwei ersten Teilprozesse und einen Kombinationsbehälter für den Konvertierungs-Teilprozeß und den Kühl-Teilprozeß aufweisen, parallel zueinander liegen. Hier ist es möglich, die Teilprozesse paarweise einander in der Verweilzeit anzupassen und eine optimale Energiebilanz zu erzielen.

Insbesondere kann die Mischvorrichtung eine Schnecke aufweisen, deren Drehachse zur Mittelachse des Behälters geneigt ist und auf einer Konusfläche umläuft, die einem konischen Teil des Behälters angepaßt ist. Hiermit wird Material, daß sich an der Konuswand festsetzt, wieder freigemacht und aufgelockert.

Außerdem ist es von Vorteil, daß das Volumen des Behälters, welcher der Konvertierung dient, und/oder des Behälters, welcher der Kühlung dient, kleiner ist als das Volumen eines vorgeschalteten Behälters. Hiermit wird der Tatsache Rechnung getragen, daß das Volumen des Materials durch Trocknung und Konvertierung kleiner wird. Dies führt zu einer Verminderung der Invertitions-und Betriebskosten. Außerdem ergibt sich eine kleinere Höhe der Gesamtvorrichtung.

In weiterer Ausgestaltung sind Verbindungsleitungen vorgesehen, welche den aus der Heizvorrichtung eines Behälters höherer Temperatur austretenden Wärmeträger der Heizvorrichtung eines Behälters geringerer Temperatur zuführen. Auf diese Weise läßt sich die Wärmeenergie des Wärmeträgers intensiv ausnutzen.

Günstig ist auch ein Tank, der die in dem der Konvertierung dienenden Behälter entstehenden, sich nicht-verflüssigenden Gase aufnimmt und mindestens eine Entnahmeöffnung zur Gasentnahme für den Betrieb der Vorrichtung besitzt. Auf diese Weise werden im Betrieb entstehende Gase für den weiteren Betrieb ausgenutzt.

Insbesondere kann eine Entnahmeöffnung für Inertgas mit einem Behälter verbindbar sein, um freien Sauerstoff, der bei seiner Entleerung hinein gelangte, vollständig zu verdrängen. Das gewonnene Inertgas wird daher einem zusätzlichen Zweck zugeführt.

Eine weitere Möglichkeit besteht darin, daß eine Entnahmeöffnung für brennbares Gas mit einem Brenner zur direkten oder indirekten Beheizung des Behälters mit der höchstens Temperatur verbindbar ist. Auc hier wird aus dem Verfahren gewonnenes Gas für den weiteren Betrieb ausgenutzt.

Ferner ist es möglich, daß eine Entnahmeöffnung für Gas über einen Verdichter mit einem Strahlapparat verbindbar ist, der Als Absaugpumpe für wenigstens einen Behälter dient. Auch hier aus dem Verfahren gewonnenes Gas weiter im Verfahren verwendet. Es wird Energie gespart.

In manchen Fällen empfiehlt sich auch ein Mahlwerk zum Zerkleinern des getrockneten Materials am Eingang des Behälters, welcher der Konvertierung dient. Durch die Zerkleinerung läßt sich die Konvertierung leichter bewerkstelligen.

Eine andere Ausführungsform sieht vor, daß die Behälter, Steuervorrichtungen und sonstige Armaturen der Vorrichtung auf einem fahrbaren Rahmen montiert sind. Man kann daher mit der Gesamtvorrichtung zu einer Auswertestation vorfahren. Das Abfallmaterial muß nicht an eine stationäre Verarbeitungsstation angeliefert werden.

Günstig ist es auch, daß Behälter mit zwei Heizvorrichtungen versehen sind. Man kann dann ohne Schwierigkeiten zwei verschiedene Teilprozesse durchführen.

Bei einer Ausführungsform gibt es eine Dampfstrahl-Vakuumpumpe zum Absaugen von Wasserdampf aus einem Behälter, einen mit diesem Dampf versorgbaren Behälter-Heizmantel, der mit einem Kondensatablauf und einem Dampfauslaß versehen ist, einen mit dem Dampfauslaß verbundenen Dampfstrahl-Verdichter und einen mit Kondensat versorgten Dampfkessel als Treibdampferzeuger, der den Dampfstrahl-Verdichter und die Dampfstrahl-Vakuumpumpe versorgt. Der Dampf, der erst mit einer bestimmten Temperatur aus dem Material ausgetrieben werden kann, erfährt eine weitere Verwendung, die seine Wärmeenergie nutzt. Dies ergibt eine erhöhte Wirtschaftlichkeit.

Günstig ist auch ein Kreislauf mit einer einen Brenner aufweisenden Aufheizvorrichtung für einen die Konvertierung bewirkenden Behälter, einer Heizvorrichtung eines weiteren Behälters und der Kühlvorrichtung des der Kühlung dienenden Behälters. Der Wärmeträger, der vorzugsweise ein Wärmeträger-Öl ist, erfährt eine Mehrfach-Ausnutzung nach einmaliger Aufheizung, was ebenfalls für die Wirtschaflichkeit von Interesse ist.

Desweiteren empfiehlt sich ein Dampfüberhitzer, in welchem der aufgeheizte flüssige Wärmeträger den abgesaugten Wasserdampf überhitzt. Auch dies verbessert die Energiebilanz.

Die Erfindung wird nachstehend anhand in der Zeichnung dargestellter bevorzugter Ausführungsbeispiele in Form von Schaltbildern näher beschrieben. Es zeigen:

Fig. 1     eine Vorrichtung mit zwei in Reihe geschalteten Behältern,

Fig. 2 eine Vorrichtung mit vier in Reihe geschalteten Behältern,

Fig. 3 eine Vorrichtung mit zwei parallel geschalteten Behältern, die mit zwei weiteren Behältern in Reihe liegen,

Fig. 4 eine Schaltung mit der Parallelschaltung zweier in Reihe liegender Behälter und

Fig. 5 eine Schaltung mit der Parallelschaltung dreier Behälter, die mit einem vierten Behälter in Reihe liegen.

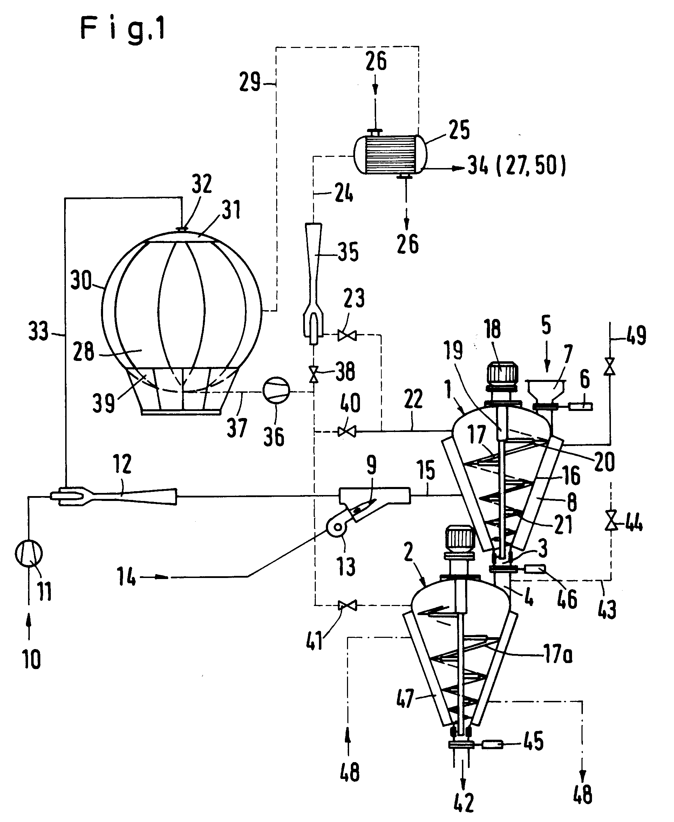

In Fig. 1 gibt es einen Kombinationsbehälter 1, in welchem das Füllgut den Teilprozessen der Aufwärmung, Trocknung und Erhitzung bis zum Abschluß der Konvertierung ausgesetzt wird, und einen Behälter 2, in welchem die Charge von der Prozeßtemperatur, welche zwischen 200° C und 600° C liegt, auf eine Temperatur abgekühlt wird, die derart niedrig ist, daß das verkohlte Füllgut sich nicht mehr entzünden kann, wenn es mit Luft bzw. Sauerstoff in Berührung kommt.

Der Kombinationsbehälter 1 ist derart über den kühlbaren Behälter 2 angeordnet, daß die unten angeordnete Entleeröffnung 3 des Kombinationsbehälters 1 direkt über der oben angeordeneten Füllöffnung 4 des kühlbaren Behälters 2 zu liegen kommt.

Das Füllgut 5 besteht aus einer organisches Material enthaltenden Charge, die bei geöffnetem Schieber 6 über einen Eingabetrichter 7 in den Kombinationsbehälter 1 geschüttet bzw. eingetragen wird. Nachdem der Füllvorgang abgeschlossen ist, wird der Schieber 6 verschlossen und der Kombinationsbehälter 1 wird aurgeheizt.

Die Heizvorrichtung 8 dieses Kombinationsbehälters 1 besteht aus einem Doppelmantel, in den heiße Verbrennungsgase 9 eingespeist werden. Die für die Verbrennung notwendige Luft 10 wird durch einen Verdichter 11 und gegebenenfalls einen Strahlapparat 12 einem Brenner 13 zugeführt. Das Heizmedium 14 für den Brenner 13 kann aus Heizöl, Erd-, Stadt- oder Propangas oder einem anderen Brennstoff bestehen. Die bei der Verbrennung entstandenen heißen Verbrennungsgase 9 werden über eine Zuleitung 15 in die Heizvorrichtung 8 eingespeist, welche um einen konischen Teil 16 des Kombinationsbehälters 1 herum angeordnet ist. Die abgekühlten Verbrennungsgase 9 treten über eine Leitung 49 aus der Heizvorrichtung aus. Entsprechende Meß- und Regeleinrichtungen (nicht dargestellt) sorgen für die richtigen Temperaturverhältnisse.

Damit das im Kombinationsbehälter 1 befindliche Füllgut 5 gleichmäßig und rasch aufgeheizt wird, ist im Inneren des Behälters eine sich drehende Mischvorrichtung 17 vorgesehen. Ein Antriebsmotor 18 treibt einen drehbaren Schaft 19 in der Mittelachse des Kombinationsbehälters 1 an.

An dem Schaft 19 befinden sich Speichen 20, welche nahe dem konischen Teil 16 der Wand des Kombinationsbehälters 1 mit spiralförmigen Abstreifern 21 versehen sind. Durch deren Drehbewegung wird das Füllgut 5 durchmischt, was eine gleichmäßige Erwärmung zu Folge hat. Je höher die Drehzahl des Antriebsmotors 18 ist, desto höher ist die Mischgeschwindigkeit und um so besser ist die Durchmischung und die Entgasung des Füllguts 5. Da das Erhitzen des Füllguts 5 unter Luftausschluß erfolgt, wird die im Kombinationsbehälter 1 befindliche Luft aufgebraucht; danach schwelt das Füllgut 5 unter Wärmezufuhr infolge der Heizvorrichtung 8 weiter und verkohlt. Die Gase, die dabei entstehen, entweichen über eine Leitung 22, ein geöffnetes Ventil 23 und eine Leitung 24, durch die sie in einen Kondensator 25 gelangen, welcher mittels eines durchfließenden Kühlmediums 26 gekühlt wird. Die Gase, die beim Schwelprozeß im Kombinationsbehälter 1 entstehen, sind in der Hauptsache Dämpfe von Reaktionswasser 50 und Öl 27, welche sich im Kondensator 25 verflüssigen, und Gase 28, die unter atmosphärischen Bedingungen und bei Temperaturen über 0° C nicht kondensieren. Diese nicht kondensierbaren Gase 28 treten oben am Kondensator 25 aus und gelangen über eine Leitung 29 in einen Tank 30. Sie bestehen aus gasförmigem Brennstoff 31, nämlich Methan und Kohlenmonoxyd, die sich oben im Tank 30 ansammeln, und im weitaus größten Teil aus Kohlendioxid 39, das sich wegen seines Gewichts unten im Tank 30 ansammelt. Die gasförmigen Brennstoffe 31 werden über eine Entnahmeöffnung 32 am obersten Punkt des Tanks 30 entnommen und über eine Leitung 33 im Brenner 13 zugeführt. In manchen Fällen ist es vorteilhaft, wenn die gasförmigen Brennstoffe 31 aus dem Tank 30 abgesaugt werden, was durch Anschließen der Leitung 33 an die Saugseite des Strahlapparates 12 geschehen kann.

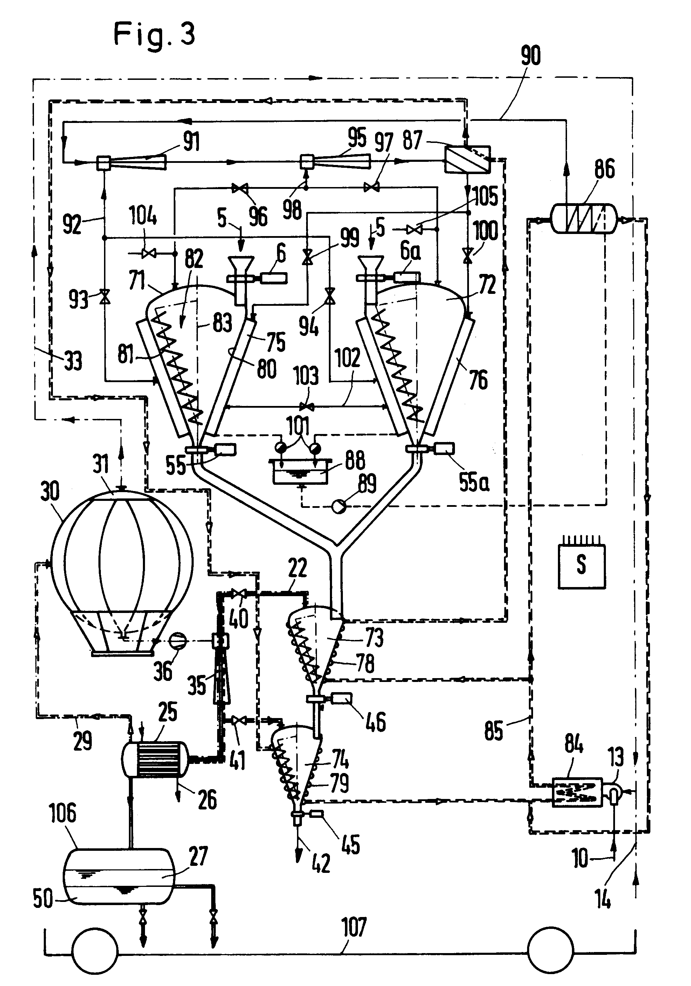

Die aus dem Kondensator 25 austretende Flüssigkeit 34 stellt ein Gemisch dar, welches aus Öl 27 und Reaktionswasser 50 besteht. In einem nur in den Fig. 3 bis 5 dargestellten Auffangbehälter 106 sammelt sich das Öl 27 oben und das Reaktionswasser 50 unten an, da das spezifische Gewicht des Öls 27 leichter ist als dasjenige des Reaktionswassers 50.

Das Entgasen des schwelenden Füllguts 5 wird durch Ausbildung eines Unterdrucks bzw. eines Vakuums verstärkt und beschleunigt. Die Leitung 22 wird deshalb über das geöffnete Ventil 23 an der Saugseite eines Strahlapparates 35 angeschlossen. Ein Verdichter 36 entnimmt über eine Entnahmeöffnung 37, welche unten am Tank 30 angeschlossen ist, das inerte Gas Kohlendioxid 39 und treibt es bei geöffnetem Ventil 38 und geschlossenen Ventilen 40 und 41 durch den Strahlapparat 35, wo saugseitig, also an der Leitung 22, ein Unterdruck entsteht. Das in Kohlendioxid 39 dient daher dem Strahlappart 35 als Treibmittel.

Ist der Schwelvorgang bzw. die Umwandlung des organischen Anteils des Füllgutes 5 in Kohle 42, verdampfte Flüssigkeiten 34 und Gase 28 abgeschlossen, wird die Kohle 42 in den Behälter 2, der mit einer Kühlvorrichtung 47 versehen ist, entladen. Da die heiße Kohle 42 sofort brennen würde, wenn sie mit Luft bzw. Sauerstoff in Berührung kommt, wird die Luft bzw. der Sauerstoff zuvor aus dem Behälter 2 verdrängt. Dies geschieht durch Schließen der Ventile 38, 40 und durch Öffnen des Ventils 41. Der Verdichter 36 drückt bei geschlossenem Schieber 45 Kohlendioxid 39 aus dem Tank 30 in den Behälter 2. Da das Kohlendioxid 39 schwerer als Luft ist, tritt letztere aus einer Leitung 43, welche oben am Behälter 2 angebracht ist, aus. Sobald der Luftaustritt beendet ist, was von einem nicht dargestellten Sensor festgestellt wird, schließt das Ventil 44. Anschließend öffnet ein Schieber 46, welcher zwischen der Entleeröffnung 3 des Kombinationsbehälters 1 und der Füllöffnung 4 des Behälters 2 angebracht ist, und die heiße Kohle 42 gelangt vom Kombinationsbehälter 1 in den Behälter 2. Die Behälterwand ist mit einer Kühlvorrichtung 47 in Form eines Doppelmantels versehen, durch den Kühlmittel 48 hindurchgepumpt wird. Damit die Kohle 42 im Behälter 2 gleichmäßig und rasch heruntergekühlt, ist der Behälter 2 ebenfalls mit einer Mischvorrichtung 17a, entsprechend der Mischvorrichtung 17 im Kombinationsbehälter 1, ausgestattet. Sobald die Kohle 42 im Behälter 2 soweit heruntergekühlt ist, daß sie nicht mehr brennt, wenn sie mit Luft oder Sauerstoff in Berührung kommt, öffnet das Ventil 45 und die Kohle 42 wird entladen.

Die Arbeitsschritte sind zeitlich so aufeinander abgestimmt, daß - während im Kombinationsbehälter 1 das Füllgut 5 aufgeheizt und zu Kohle 42 umgewandelt wird - im Behälter 2 die Heiße Kohle 42 der vorangehenden Charge abgekühlt wird. Danach wird der Schieber 45 zum Entleeren der Kohle 42 geöffnet. Nach erfolgter Entladung schließt der Schieber 45 wieder; sodann wird der Sauerstoff aus dem Behälter 2 verdrängt und der Schieber 46 öffnet wieder zur Füllung des Behälters 2.

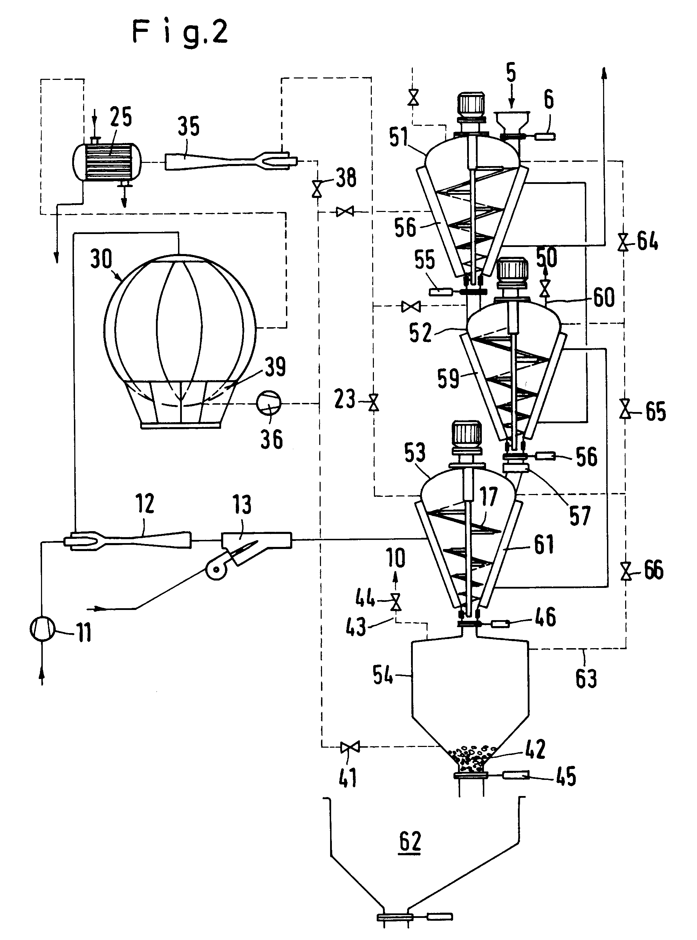

In Fig. 2 ist eine Ausführungsform dargestellt, bei der entsprechende Teile die Gleichen Bezugszeichen wie in Fig. 1 erhalten. Bei dieser Anordnung durchläuft jede Charge aus Füllgut 5 in vier in Reihe geschalteten Behältern 51, 52, 53 und 54 je einen Teilprozeß. Die einzelnen Behälter sind durch die bereits erwähnten Schieber 6, 45 und 46 sowie durch weitere Schieber 55 und 56 gegeneinander absperrbar. Zwischen die Behälter 52 und 53 ist ein Mahlwerk 57 geschaltet, das durch Zerkleinerung die Umwandlung des organischen Materials im Behälter 53 beschleunigt. Die drei ersten Behälter besitzen je eine Mischvorrichtung 17. Ist der vierte Behälter 54 hinreichend groß bemessen, wird bei ihm keine Kühleinrichtung und auch keine Mischvorrichtung 17 benötigt.

Im Behälter 51 wird das organische Material 5 durch Erwärmen mittels einer durch einen Doppelmantel gebildeten Heizvorrichtung 58 auf ein Temperaturniveau von ca. 115° C getrocknet. Dann erfolgt die Entleerung in den Behälter 52 und die Aufheizung des Füllguts 5 mit Hilfe einer ebenfalls durch einen Doppelmantel gebildeten Heizvorrichtung 59 auf 180° C bis 200° C. Bei diesem Schritt wird der größte Teil des Reaktionswasser 50 verdampft, wobei der Dampf über die Leitung 60 austritt. Durch Kondensation dieses Wasserdampfs kann Verdampfungswärme zurückgewonnen werden. Im dritten Teilprozeß gelangt das Füllgut 5 in den Behälter 53 mit der höchsten Temperaturstufe, nämlich mindestens 200° C bis maximal 600° C, die wiederum mit Hilfe einer durch einen Doppelmantel gebildeten Heizvorrichtung 61 erzielt wird. Hier erfolgt die Konvertierung zu Kohle 42. Es entstehen dieselben Reaktionsprodukte wie im Zusammenhang mit Fig. 1 beschrieben. Schließlich erfolgt die Entleerung der Kohle 42 in den Behälter 54, wo zuvor der Sauerstoff durch Einleiten von Kohlendioxid 39 aus dem Tank 30 verdrängt worden ist. Nach Abkühlung kann die Kohle 42 in den offenen Kohlebunker 62 ausgetragen werden.

Eine Leitung 63 mit Ventilen 64, 65 und 66 dient dazu, vor dem Öffnen der Schieber 55, 56 und 46 einen Druckausgleich zwischen aufeinander folgenden Behältern herzustellen.

Die heißen Verbrennungsgase des Brenners 13 durchströmen nacheinander die Heizvorrichtung 61 des Behälters 53, die Heizvorrichtung 59 des Behälters 52 und die Heizvorrichtung 58 des Behälters 51, so daß eine gute Ausnutzung der Wärme erfolgt.

Bei der Ausführungsform nach Fig. 3 sind die Bezugszeichen der Fig. 1 und 2 beibehalten worden, sofern es sich um gleichartige Bauteile handelt.

Bei dieser Anordnung gibt es zwei parallel geschaltete Kombinationsbehälter 71 und 72 sowie zwei mit der Parallelschaltung in Reihe liegende Behälter, nämlich einen der Konvertierung dienenden Behälter 73 und einen der Kühlung dienenden Behälter 74. Diese Behälter sind gegenüber der Atmosphäre bzw. gegeneinander durch die Schieber 6, 6a, 55, 55a, 46 und 45 abgetrennt. Die Kombinationsbehälter 71 und 72 besitzen je eine durch eine Doppelwand gebildete Heizvorrichtung 75 bzw. 76, die Behälter 73 und 74 je eine durch Rohre gebildete Heizvorrichtung 78 bzw. Kühlvorrichtung 79. Jeder Behälter besitzt im Bereich der Heizvorrichtung einen konischen Teil 80, dem die Schnecke 81 einer Mischvorrichtung 82 benachbart ist. Die Schnecke 81 dreht sich um eine geneigte Drehachse, die ihrerseits um die Mittelachse 83 des Behälters drehbar ist, so daß sie auf einer Konusfläche umläuft. Dies ergibt ein besonders energiesparendes Mischen. Die Mischgeschwindigkeit selbst ist wie bei Fig. 1 einstellbar. Ähnlich sind die Mischvorrichtungen auch bei den übrigen Behältern aufgebaut. Wegen des Aufbaus dieser Mischvorrichtung wird beispielsweise auf DE-B-35 12 887 verwiesen.

Ein Wärmeträgeröl-Heizkreislauf umfaßt eine als Wärmetauscher ausgebildete Aufheizvorrichtung 84, die von den Rauchgasen des Brenners 13 beaufschlagt wird. Das Wärmeträgeröl gelangt über eine Leitung 85 einerseits zu einem Dampfkessel 86, welcher Treibdampf erzeugt, und andererseits zu der Heizvorrichtung 78 des Behälters 73 und weiter zu einem Dampfüberhitzer 87. Von dort geht das Wärmeträgeröl zu der Kühlvorrichtung 79 des Behälters 74 und zur Aufheizvorrichtung 84 zurück.

Aus einem Kondensatsammelbehälter 88 wird mittels einer Pumpe 89 Wasser in den Dampfkessel 86 gefördert, der über eine Leitung 90 Treibdampf an einen Dampfstrahlverdichter 91 abgibt. Dieser saugt Schlupfdampf über eine Leitung 92 und Ventile 93 bzw. 94 aus den Heizvorrichtungen 75 und 76 an. Mit der Treib- und Schlumpfdampfmenge wird eine Dampfstrahl-Vakuumpumpe 95 betrieben, die über die Ventile 96 bzw. 97 und eine zugehörige Leitung 98 Dampf aus den Kombinationsbehältern 71 bzw. 72 abzusaugen vermag. Der Dampf wird im Dampfüberhitzer 87 überhitzt und dann über ein Ventil 99 bzw. 100 der Heizvorrichtung 75 bzw. 76 zugeführt. Das bei der Wärmeabgabe entstehende Kondensat kann über Kondensatabscheider 101 dem Kondensatsammelbehälter 88 zugeführt werden. Eine Leitung 102 mit Ventil 103 dient dazu, die beiden Heizvorrichtungen 75 und 76 in Reihe zu schalten.

Um in den Kombinationsbehältern 71 und 72 mit Überdruck arbeiten zu können, sind auf vorbestimmte Werte einstellbare Überdruckventile 104 bzw. 105 vorgesehen.

Mit der beschriebenen Vorrichtung wird ein vierstufiges Verfahren mit den nachstehenden Teilprozessen durchgeführt:

## 1. Aufheizen

Eine Charge aus Füllgut 5, das organisches Material enthält, wird in den Kombinationsbehälter 71 eingefüllt und dort nach Schließen der Schieber 6 und 55 unter ständiger Beheizung und Durchmischung mittels der Mischvorrichtung 82 auf eine Temperatur von etwa 110° C erhitzt, wobei mit Hilfe des Überdruckventils 104 ein Überdruck von etwa 2 bar aufrechterhalten wird. Der überhitzte Dampf wird dabei über das Ventil 100 der Heizvorrichtung 76 und anschließend über das Ventil 103 der Heizvorrichtung 75 zugeführt.

## 2. Trocknen

Durch Schließen des Überdruckventils 104 und Öffnen des Ventils 96 wird der Innenraum des Kombinationsbehälters 71 an die Dampfstrahl-Vakuumpumpe 95 angeschlossen, so daß der Iinnenraum unter einem Unterdruck von 0,6 bis 0,95 bar steht. Gleichzeitig wird der Heizkreislauf mittels der Ventile 93, 94, 99, 100 derart umgeschaltet, daß der überhitzte Dampf zunächst der Heizvorrichtung 75 und erst dann der Heizvorrichtung 76 zugeführt wird.

Unter diesen Bedingungen erfolgt ein starkes Austreten von Wasserdampf (Brüdendampf), der in der Dampfstrahl-Vakuumpumpe 95 mit dem Treib- und Schlupfdampf vermischt wird und der weiteren Beheizung dient. Bei der zunehmenden Trocknung sinkt zunächst die Temperatur auf etwa 90° C und steigt dann wieder auf 110° C. Das trocknende Material erhält zunehmend eine krümmlige Struktur, so daß ohne Erhöhung der elektrischen Antriebsenergie die Mischgeschwindigkeit und damit die Wärmezufuhr zu den einzelnen Teilchen erhöht werden kann. Dies ist von besonderer Bedeutung, weil während des Trocknungsvorganges die größte Wärmemenge übertragen werden muß und daher ein großes Interesse besteht, die Dauer dieser Behandlungsstufe zu verkürzen.

Der Kombinationsbehälter 72 führt die gleichen Teilprozesse für die nachfolgende Charge durch, so daß gleichzeitig mit dem Trocknen einer Charge im Kombinationsbehälter 71 das Aufheizen der nächsten Charge im Kombinationsbehälter 72 erfolgt.

## 3. Konvertieren

Durch Öffnen des Schiebers 55 gelangt die getrocknete Charge in den der Konvertierung dienenden Behälter 73. Dieser ist erheblich kleiner als die beiden Behälter 71 und 72, weil durch das Trocknen die Masse der Charge vermindert worden ist. Im Konvertierungsbehälter 73 erfolgt eine Beheizung von etwa 110° C auf etwa 350° C, wozu man Wärmeträgeröl mit einer Temperatur von etwa 350° C bis 450° benötigt. Während der Konvertierung treten aus dem Füllgut 5 wiederum Dämpfe und Gase aus, welche über die Leitung 22 abgesaugt und dem Kondensator 25 zugeführt werden. Zunächst entsteht überwiegend Dampf aus Reaktionswasser 50, später überwiegend Öldampf und brennbare Gase, wie dies in Verbindung mit Fig. 1 beschrieben worden ist. Die gasförmigen Bestandteile werden im Tank 30, die flüssigen Bestandteile in dem hierzu zusätzlich gezeigten Auffangbehälter 106 für Flüssigkeiten 106 gesammelt. Zurück bleibt im wesentlichen Kohle bei einer Temperatur von etwa 350° C.

## 4. Kühlen

Der Behälter 74 wird durch Öffnen des Ventils 41 und Schließen des Ventils 40 mit Inertgas ($CO_2$) aus dem Tank 30 unter Verdrängung der darin enthaltenen Luft gefüllt. Dann wird der Schieber 46 geöffnet und die heiße Kohle in den Behälter 74 umgefüllt. Dort wird sie unter ständiger Mischung von dem rücklaufenden Wärmeträgeröl gekühlt. Erst wenn sie eine Temperatur unterschritten hat, bei der eine Selbstentzündung ausgeschlossen ist, wird die Kohle durch Öffnen des Schiebers 45 ins Freie entlassen.

Die einzelnen Teilprozesse laufen taktmäßig ab, wobei die Kombinationsbehälter 71 und 72 abwechselnd die beiden ersten Teilprozesse und die Behälter 73 und 74 jeweils den dritten bzw. vierten Teilprozeß durchführen. Insgesamt ergibt sich eine rasche und wirtschaftliche Arbeitsweise.

In Fig. 3 ist veranschaulicht, daß die gesamte Anordnung auch auf einem Wagen 107 montiert sein kann, so daß sie verfahrbar ist.

Ferner sind Steuereinrichtungen S veranschaulicht, deren Ausgänge mit den Ventilen, Schiebern, Mischvorrichtungen u.dgl. verbunden sind, so daß die einzelnen Teilprozesse sinnrichtig nacheinander ablaufen.

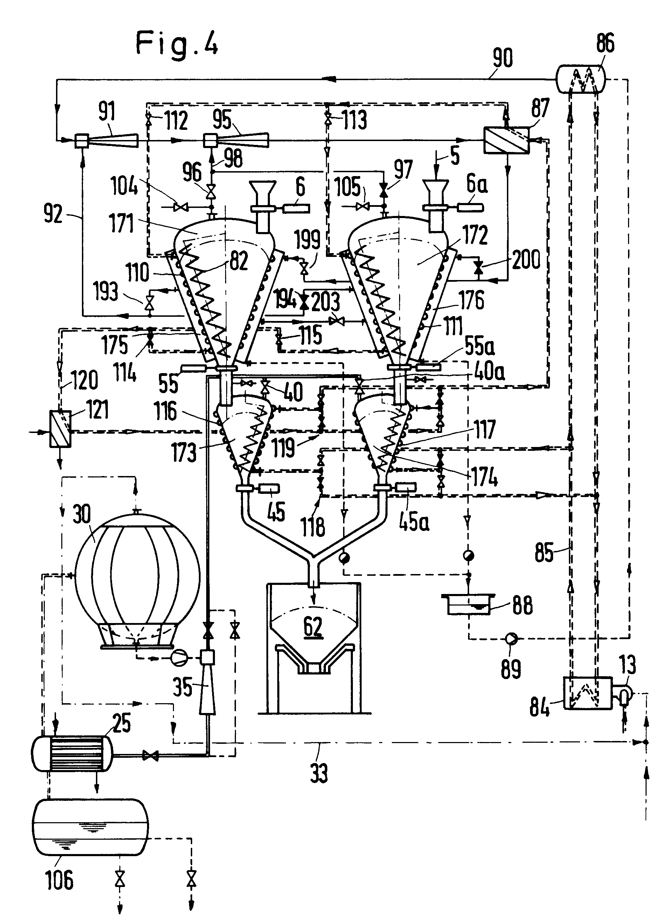

Bei der Ausführungsform nach Fig. 4 sind zwei Kombinationsbehälter 171 und 172 vorgesehen, die, wie in Fig. 3, abwechselnd das Aufheizen und Trocknen durchführen. Sie liegen je mit einem Kombinationsbehälter 173 bzw. 174 in Reihe, welche abwechselnd den Konvertierungs-und Kühl-Teilprozeß durchführen. Letzteres hat den Vorteil, das die bei der Konvertierung zurückbleibende Kohle nicht umgefüllt werden muß und daher auch eine Inertgasfüllung vor dem Kühlen unterbleiben kann.

Die Kombinationsbehälter 171 und 172 besitzen außer einer durch einen Doppelmantel gebildete Heizvorrichtung 175 bzw. 176, die mit Heißdampf gespeist, wird noch eine durch Rohre gebildete Heizvorrichtung 110 bzw. 111, die mit Wärmeträgeröl gespeist wird. Der alternativen Zufuhr des Dampfes dienen die Ventile 193, 194, 199, 200 und 203. Die Heizvorrichtungen 110 und 111 werden mit Hilfe von Ventilen 112, 113, 114 und 115 abwechselnd wirksam gemacht. Die Kombinationsbehälter 173 und 174 besitzen durch Rohre gebildete Heiz- bzw. Kühlvorrichtungen 116 bzw. 117, die mit Hilfe von Ventilanordnungen 118 und 119 abwechselnd wirksam gemacht werden. Sie sind während des Konvertierungs-Teilprozesses mit der jeweils in Betrieb befindlichen Heizvorrichtung 110 bzw. 111 in Reihe geschaltet und dienen während des Kühl-Teilprozesses der Kühlung, wobei abgekühltes Wärmeträgeröl über eine Leitung 120 und eine Wärmetauscher 121 mittels der Ventilanordnung 118 und 119 dem kühlenden Kombinationsbehälter 173 bzw. 174 zugeführt wird.

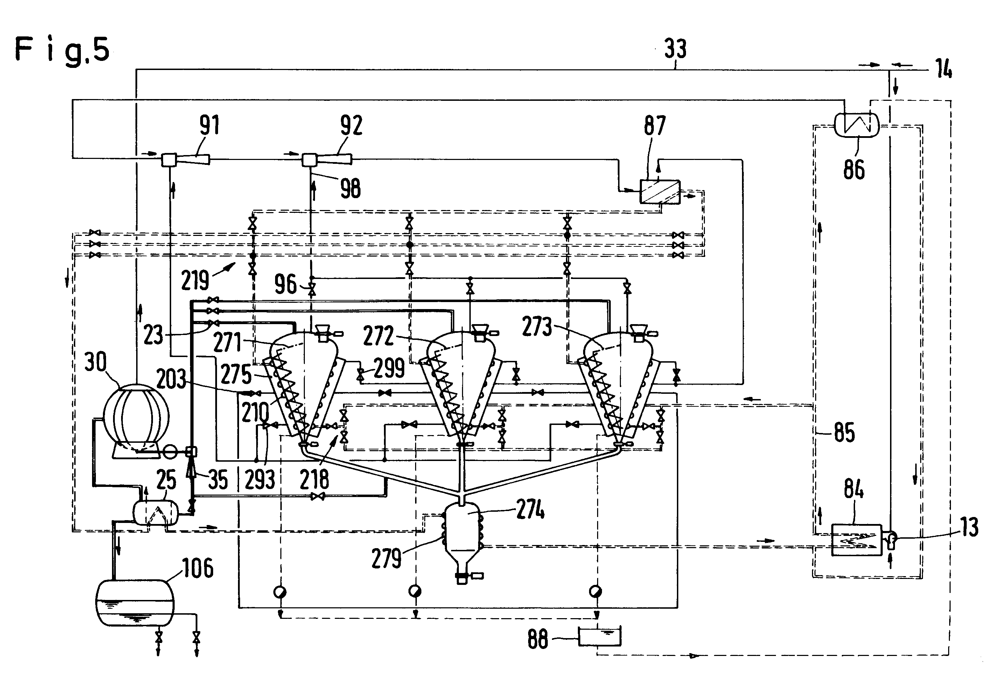

Bei der Ausführungsform nach Fig. 5 sind drei Kombinationsbehälter 271, 272 und 273 parallel zu einander geschaltet und liegen mit einem Kühlbehälter 274 in Reihe. Die drei erst genannten Behälter führen parallel zu einander, aber zeitlich versetzt, die Teilprozesse des Aufheizens, Trocknens und Konvertierens durch, während der Kühlbehälter 274 dem Kühl-Teilprozeß zugeordnet ist.

Wiederum besitzen die Kombinationsbehälter je zwei Heizvorrichtungen, nämlich eine mit Heißdampf versorgte, durch einen Doppelmantel gebildete Heizvorrichtung 275 und eine mit Wärmeträgeröl versorgte, durch Rohre gebildete Heizvorrichtung 210, wie dies lediglich in Verbindung mit dem Kombinationsbehälter 271 dargestellt ist. Ventile 293 und 299 dienen dem wahlweisen Anschluß der Heizvorrichtung 275 an den Dampfüberhitzer 87. Mehrfach vorgesehen Ventile 203 dienen dem Druckausgleich bei aufeinander folgenden Beheizungsvorgängen. Ventilanordnungen 218 und 219 sorgen dafür, daß das Wärmeträgeröl jeweils den richtigen Heizvorrichtungen 210 zugeführt wird. Der Innenraum der Behälter ist über Ventile 96 mit der Dampfabsaugleitung 98 oder über Ventile 23 mit der Treibmittelpumpe 35 und dem Kondensator 25 verbindbar.

Es sei angenommen, daß der Kombinationsbehälter 271 den Aufheiz-Teilprozeß, der Kombinationsbehälter 272 den Trocknungs-Teilprozeß und der Kombinationsbehälter 273 den Konvertierungs-Teilprozeß durchführt. Dann wird der Kombinationsbehälter 273 mit dem heißen Wärmeträgeröl beheizt, das anschließend den Dampfüberhitzer 87, dann die Rohr-Heizvorrichtung des Kombinationsbehälters 272 und schließlich die Rohr-Heizvorrichtung des Kombinationsbehälters 271 durchströmt. Anschließend geht das Wärmeträgeröl durch den Kondensator 25 und die Kühlvorrichtung 279 des Kühlbehälters 274. Überhitzter Wasserdampf gelangt vom Dampfüberhitzer 87 in die Doppelmantel-Heizvorrichtung des Behälters 272 und anschleißend in dei Doppelmantel-Heizvorrichtung 275 des Behälters 271, von wo der Dampf mittels des Dampfstrahlverdichters 91 abgesaugt und das Kondensat in den Kondensatsammler 88 abgeführt wird. In beiden Stufen, in denen die größte Wärme übertragen werden muß, nämlich das Aufheizen und Trocknen, wird daher eine zweifache Beheizung durchgeführt.

Bei der Ausführungsform nach Fig. 5 ist es nicht erforderlich, daß die einzelnen Teilprozesse die gleiche Taktzeit haben. Vielmehr genügt es, wenn die Summe der drei ersten Teilprozesse gleich dem Dreifachen des Zeitabstandes ist, in welchem die Chargen des Füllguts 5 zugeführt werden und in welchem der jeweils die Konvertierung durchführende Behälter in den Kühlbehälter 274 entleert wird.

Insgesamt ergibt sich daher ein Prozeß, der im druck- und vakuumdichten Behältern, also geruchslos, abläuft. Auch den Entnahmestellen für Rohöl, Reaktionswasser, nicht brennbare Gase, Kondensatüberschuß u.dgl. können geeignete Reinigungs- und Stofftrennvorrichtungen zur Vermeidung von Geruchsbelästigungen vorgesehen werden.

Von den dargestellten Ausführungsbeispielen kann in vielfacher Hinsicht abgewichen werden, ohne den Grundgedanken der Erfindung zu verlassen. So kann auf den Dampfüberhitzer 87 verzichtet werden. Dampfstrahlverdichter 91 und Dampfstrahl-Vakuumpumpe 92 können auch parallel zu einander geschaltet werden.

Das Füllgut 5 kann organisches Material oder anorganisches Material oder ein Gemisch von beiden enthalten. Das anorganische Material wird zwar nicht zu Öl und Kohle konvertiert, kann aber durch Trocknung und gegebenenfalls weitere Entgasung (Reaktionswasser, Zersetzungsprodukte) im Gewicht und Volumen stark reduziert werden. Der verbleibende Rest läßt sich daher leichter abtransportieren und deponieren als bisher; dies gilt insbesondere, wenn er als Pulver vorliegt.

**Patentansprüche**

1. Verfahren zur Behandlung von Abfallmaterial durch Erhitzen, insbesondere zur Gewinnung von Brennstoffen aus organischem Material, das zur Bildung von Kohle und gasförmigen, teilweise durch Abkühlen verflüssigbaren Reaktionsprodukten unter Luftausschluß auf eine zwischen 200°C und 600°C liegende Konvertierungstemperatur erhitzt wird, wobei das Material nacheinander mehrere Teilprozesse durchläuft, von denen ein erster Teilprozeß die Aufwärmung, ein zweiter die Trocknung und ein dritter die Konvertierung des Materials bewirkt, wobei nacheinander zu durchlaufende Teilprozesse gleichzeitig in voneinander abgeschlossenen Kammern mit teilprozeß-eigenen Behandlungsparametern, wie Temperatur, Druck oder Mischgeschwindigkeit, durchgeführt werden, und wobei der Betriebsdruck im ersten Teilprozeß über und im zweiten Teilprozeß unter dem Verdampfungsdruck bei der zugehörigen Materialtemperatur gehalten wird.

2. Verfahren nach Anspruch 1, dadurch gekennzeichnet, daß zumindest ein Behandlungsparameter während wenigstens eines Teilprozesses geändert wird.

3. Verfahren nach Anspruch 1 oder 2, dadurch gekennzeichnet, daß die Behandlungsparameter für den Teilprozeß, bei dem das Material die größte Wärmemenge aufzunehmen hat, so gewählt sind, daß dessen Teilprozeßdauer im Bereich des Minimums liegt.

4. Verfahren nach einem der Ansprüche 1 bis 3, dadurch gekennzeichnet, daß die Behandlungsparameter so gewählt sind, daß die erforderliche Verweildauer für eine Charge in jedem ihrer Teilprozesse annähernd gleich ist.

5. Verfahren nach einem der Ansprüche 1 bis 4, dadurch gekennzeichnet, daß das Material im ersten Teilprozeß bei einem etwas über dem Atmosphärendruck liegenden Betriebsdruck auf eine etwas über 100°C liegende Temperatur erwärmt und im zweiten Teilprozeß bei einem unter dem Atmosphärendruck liegenden Betriebsdruck auf einer Temperatur in einem Bereich um 100°C gehalten wird.

6. Verfahren nach einem der Ansprüche 1 bis 5, dadurch gekennzeichnet, daß die Beheizung in mindestens einem Teilprozeß unter Verwendung des im Trocknungs-Teilprozeß gewonnenen Wasserdampfes erfolgt.

7. Verfahren nach einem der Ansprüche 1 bis 6, dadurch gekennzeichnet, daß aus dem Konvertierungs-Teilprozeß gewonnene brennbare Gase verbrannt werden und die Beheizung im Konvertierungs-Teilprozeß unter Verwendung der Verbrennungswärme erfolgt.

8. Verfahren nach Anspruch 7, dadurch gekennzeichnet, daß ein Wärmeträger durch die Verbrennungswärme beheizt wird und dieser im Anschluß an die Wärmeabgabe im Konvertierungs-Teilprozeß das Material in mindestens einem vorangehenden Teilprozeß beheizt und/oder den Wasserdampf überhitzt.

9. Verfahren nach einem der Ansprüche 1 bis 8, dadurch gekennzeichnet, daß an den Konvertierungs-Teilprozeß ein Kühl-Teilprozeß anschließt, in dem die Kohle unter Luftausschluß auf eine unter der Zündtemperatur liegende Temperatur abgekühlt wird.

10. Verfahren nach Anspruch 9, dadurch gekennzeichnet, daß die Kühlung im Kühl-Teilprozeß mittels eines Wärmeträgers erfolgt, der zuvor das Material im ersten Teilprozeß beheizt hat.

11. Verfahren nach einem der Ansprüche 1 bis 10, dadurch gekennzeichnet, daß aus dem Konvertierungs-Teilprozeß gewonnenes Inertgas in mindestens einem Teilprozeß verwendet wird, um diesen frei von Sauerstoff durchzuführen.

12. Verfahren nach einem der Ansprüche 1 bis 11, dadurch gekennzeichnet, daß mindestens zwei aufeinanderfolgende Teilprozesse in derselben Kammer durchgeführt werden, wobei der Übergang durch Umsteuerung der Behandlungsparameter erfolgt.

13. Vorrichtung zur Behandlung von Abfallmaterial durch Erhitzen, insbesondere zur Durchführung des Verfahrens nach einem der Ansprüche 1 bis 12, mit mindestens zwei mit absperrbaren Füll- und Entleeröffnungen (3, 4) versehenen Behältern (1, 2; 51-54; 71-74; 171-174; 271-274), die für die gleichzeitige Durchführung unterschiedlicher Teilprozesse ausgelegt sind, wobei zumindest die der Erhitzung dienenden Behälter (1, 2; 51-53; 71-74; 171-174; 271-273) konisch mit nach unten kleiner werdenden Durchmesser ausgeführt sind und der konische Teil (16) außen mit einer Heizvorrichtung (8; 58, 59, 61; 75, 76, 78; 110, 111, 116, 117, 175, 176; 210, 275) und innen mit einer um ihre Mittelachse drehbaren Mischvorrichtung (17, 17a; 82) versehen ist.

14. Vorrichtung nach Anspruch 13, dadurch gekennzeichnet, daß mindestens zwei Behälter (1, 2; 51-54; 71, 73, 74; 72-74; 171, 173; 172, 174; 271, 274, 272, 274; 273; 274) in Reihe geschaltet sind.

15. Vorrichtung nach Anspruch 14, dadurch gekennzeichnet, daß die Entleeröffnung (3) eines oberen Behälters (1) sich über der Füllöffnung (4) des nachfolgenden Behälters (2) befindet.

16. Vorrichtung nach einem der Ansprüche 13 bis 15, dadurch gekennzeichnet, daß vier Behälter (51-54; 71-74; 171-174; 271-274) für vier Teilprozesse, nämlich für das Aufwärmen bzw. Vortrocknen, für das Trocknen, für das Konvertieren und für das Kühlen, vorgesehen sind.

17. Vorrichtung nach Anspruch 16, dadurch gekennzeichnet, daß alle vier Behälter (51-54) in Reihe geschaltet sind.

18. Vorrichtung nach einem der Ansprüche 13 bis 15, dadurch gekennzeichnet, daß mindestens ein Kombinationsbehälter (71, 72; 171-174; 271-273) für die Durchführung von mindestens zwei Teilprozessen vorgesehen ist, dem Steuereinrichtungen (S) zur Änderung der Heiztemperatur und/oder des Betriebsdrucks und/oder der Mischgeschwindigkeit zugeordnet sind.

19. Vorrichtung nach Anspruch 18, dadurch gekennzeichnet, daß mehrere gleichartige Kombinationsbehälter (71, 72; 271-273) zueinander parallel geschaltet und ihre Steuereinrichtungen (S) für eine zyklisch wechselnde Durchführung der Teilprozesse ausgelegt sind.

20. Vorrichtung nach Anspruch 19, dadurch gekennzeichnet, daß drei Kombinationsbehälter (271-273) für die zyklisch wechselnde Durchführung der drei ersten Teilprozesse zueinander parallel geschaltet sind und mit einem Behälter (274) für den Kühl-Teilprozeß in Reihe liegen.

21. Vorrichtung nach Anspruch 19, dadurch gekennzeichnet, daß zwei Kombinationsbehälter (71, 72) für die abwechselnde Durchführung der zwei ersten Teilprozesse zueinander parallel geschaltet sind und mit der Reihenschaltung eines Behälters (73) für den Konvertierungs-Teilprozeß und eines Behälters (74) für den Kühl-Teilprozeß in Reihe liegen.

22. Vorrichtung nach Anspruch 19, dadurch gekennzeichnet, daß zwei Reihenschaltungen, die je einen Kombinationsbehälter (171, 172) für die zwei ersten Teilprozesse und einen Kombinationsbehälter (173, 174) für den Konvertierungs-Teilprozeß und den Kühl-Teilprozeß aufweisen, parallel zu einander liegen.

23. Vorrichtung nach einem der Ansprüche 13 bis 22, dadurch gekennzeichnet, daß die Mischvorrichtung (82) eine Schnecke (81) aufweist, deren Drehachse zur Mittelachse (83) des Behälters (71) geneigt ist und auf einer Konusfläche umläuft, die einem konischen Teil (80) des Behälters (71) angepaßt ist.

24. Vorrichtung nach einem der Ansprüche 13 bis 23, dadurch gekennzeichnet, daß das Volumen des Behälters (73; 173), welcher der Konvertierung dient, und/oder des Behälters (74; 174; 274), welcher der Kühlung dient, kleiner ist als das Volumen eines vorgeschalteten Behälters.

25. Vorrichtung nach einem der Ansprüche 13 bis 24, gekennzeichnet durch Verbindungsleitungen, welche den aus der Heizvorrichtung (z.B. 61) eines Behälters höherer Temperatur austretenden Wärmeträger der Heizvorrichtung (z.B. 59) eines Behälters geringerer Temperatur zuführen.

26. Vorrichtung nach einem der Ansprüche 13 bis 25, dadurch gekennzeichnet, daß ein Tank (30) die in dem der Konvertierung dienenden Behälter (1; 53; 73; 173, 174; 271-273) entstehenden, sich nicht-verflüssigenden Gase aufnimmt und mindestens eine Entnahmeöffnung (32; 37) zur Gasentnahme für den Betrieb der Vorrichtung besitzt.

27. Vorrichtung nach Anspruch 26, dadurch gekennzeichnet, daß eine Entnahmeöffnung (37) für Inertgas mit einem Behälter (2) verbindbar ist, um freien Sauerstoff, der bei seiner Entleerung hinein gelangte, vollständig zu verdrängen.

28. Vorrichtung nach Anspruch 26 oder 27, dadurch gekennzeichnet, daß eine Entnahmeöffnung (32) für brennbares Gas mit einem Brenner (13) zur direkten oder indirekten Beheizung des Behälters mit der höchsten Temperatur verbindbar ist.

29. Vorrichtung nach einem der Ansprüche 26 bis 28, dadurch gekennzeichnet, daß eine Entnahmeöffnung (37) für Gas über einen Verdichter (36) mit einem Strahlapparat (35) verbindbar ist, der als Absaugpumpe für wenigstens einen Behälter dient.

30. Vorrichtung nach einem der Ansprüche 13 bis 29, gekennzeichnet durch ein Mahlwerk (57) zum Zerkleinern des getrockneten Materials am Eingang des Behälters (53), welcher der Konvertierung dient.

31. Vorrichtung nach einem der Ansprüche 13 bis 30, dadurch gekennzeichnet, daß die Behälter, Steuervorrichtungen (S) und sonstigen Armaturen der Vorrichtung auf einem fahrbaren Rahmen (107) montiert sind.

32. Vorrichtung nach einem der Ansprüche 13 bis 31, dadurch gekennzeichnet, daß Behälter (171, 172; 271-273) mit zwei Heizvorrichtungen (110, 111, 175, 176; 210, 275) versehen sind.

33. Vorrichtung nach einem der Ansprüche 13 bis 32, gekennzeichnet durch eine Dampfstrahl-Vakuumpumpe (95) zum Absaugen von Wasserdampf aus einem Behälter (71, 72; 171, 172; 271-273), durch eine mit diesem Dampf versorgbare Behälter-Heizvorrichtung (75, 76; 175, 176; 275), die mit einem Kondensatablauf und einem Dampfauslaß (98) versehen ist, durch einen mit dem Dampfauslaß verbundenen Dampfstrahl-Verdichter (91) und durch einen mit Kondensat versorgten Dampfkessel (86) als Treibdampferzeuger, der den Dampfstrahl-Verdichter (91) und die Dampfstrahl-Vakuumpumpe (95) versorgt.

34. Vorrichtung nach einem der Ansprüche 13 bis 33, gekennzeichnet durch einen Kreislauf mit einer einen Brenner (13) aufweisenden Aufheizvorrichtung (84) für einen flüssigen Wärmeträger, einer Heizvorrichtung (116; 210) für einen die Konvertierung bewirkenden Behälter (173; 273), einer Heizvorrichtung (111; 210) eines weiteren Behälters (172; 271, 272) und der Kühlvorrichtung (117, 279) des der Kühlung dienenden Behälters (174; 274).

35. Vorrichtung nach einem der Ansprüche 13 bis 34, gekennzeichnet durch einen Dampfüberhitzer (87), in welchem der aufgeheizte Wärmeträger den abgesaugten Wasserdampf überhitzt.

36. Vorrichtung nach einem der Ansprüche 13 bis 35, dadurch gekennzeichnet, daß an den Behälter eine Unterdruck führende Leitung (22) angeschlossen ist.

## Claims

1. A method for treating waste material by heating, in particular for extracting fuels from organic material, which, in order to form coal and gaseous reaction products partially able to liquefy by cooling, is heated, with the exclusion of air, to a conversion temperature lying between 200°C and 600°C, wherein the material runs through several partial processes one after the other, a first partial process of which effects the heating up, a second the drying and a third the conversion of the material, wherein partial processes to run through one after the other are carried out in chambers sealed from each other with specific treatment parameters for the particular partial process, such as temperature, pressure or mixing speed, and wherein the operational pressure in the first partial process is kept above the evaporation pressure and in the second partial process below the evaporation pressure at the associated material temperature.

2. A method according to claim 1, characterised in that at least one treatment parameter is altered during at least one partial process.

3. A method according to claim 1 or 2, characterised in that the treatment parameters for the partial process in which the material has to absorb the greatest quantity of heat, are selected so that its partial process duration lies close to the minimum.

4. A method according to one of claims 1 to 3, characterised in that the treatment parameters are selected such that the dwell time required for one load is approximately equal in each of its partial processes.

5. A method according to one of claims 1 to 4, characterised in that the material in the first partial process is heated to a temperature lying slightly above 100°C at an operational pressure lying slightly above the atmospheric pressure and in the second partial process is maintained at a temperature in the region of around 100°C at an operational pressure lying below the atmospheric pressure.

6. A method according to one of claims 1 to 5, characterised in that the heating occurs in at least one partial process using the steam extracted in the drying partial process.

7. A method according to one of claims 1 to 6, characterised in that combustible gases extracted from the conversion partial process are burnt and the heating in the conversion partial process occurs using the heat of combustion.

8. A method according to claim 7, characterised in that a heat transfer medium is heated by the heat of combustion and following the heat emission in the conversion partial process this medium heats the material in at least one preceding partial process and/or overheats the steam.

9. A method according to one of claims 1 to 8, characterised in that a cooling partial process follows the conversion partial process in which the coal is cooled, with the exclusion of air, to a temperature lying below the ignition temperature.

10. A method according to claim 9, characterised in that the cooling in the cooling partial process occurs by means of a heat transfer medium, which has previously heated the material in the first partial process.

11. A method according to one of claims 1 to 10, characterised in that inert gas extracted from the conversion partial process is used in at least one partial process, in order to carry this out free of oxygen.

12. A method according to one of claims 1 to 11, characterised in that at least two partial processes following each other are carried out in the same chamber, wherein the transition occurs through the reversal of the treatment parameters.

13. A device for treating waste material by heating, in particular for carrying out the method according to one of claims 1 to 12, with at least two containers (1,2; 51-54; 71-74; 171-174; 271-274) provided with at least two filling and emptying openings (3,4) able to be shut off, which containers are designed for the simultaneous execution of various partial process, wherein at least the containers (1,2; 51-53; 71-74; 171-174; 271-273) serving the heating are designed conically with a diameter becoming smaller downwardly and the conical part (16) is provided outside with a heating device (8; 58, 59, 61; 75, 76, 78; 110, 111, 116, 117, 175, 176; 210, 275) and inside with a mixing device (17, 17a; 82) able to be rotated about its central axis.

14. A device according to claim 13, characterised in that at least two containers (1,2; 51-54; 71, 73, 74; 72-74; 171, 173; 172, 174; 271, 274, 272, 274; 273; 274) are connected in series.

15. A device according to claim 14, characterised in that the emptying opening (3) of an upper container (1) is located above the filing opening (4) of the subsequent container (2).

16. A device according to one of claims 13 to 15, characterised in that four containers (51-54; 71-74; 171-174; 271-274) are provided for four partial processes, namely for the heating up or preliminary drying, the drying, the conversion and the cooling.

17. A device according to claim 16, characterised in that all four containers (51-54) are connected in series.

18. A device according to one of claims 13 to 15, characterised in that at least one combination container (71, 72; 171-174; 271-273) is provided for carrying out at least two partial processes, allocated to which there are control devices (S) for altering the heating temperature and/or the operational pressure and/or the mixing speed.

19. A device according to claim 18, characterised in that several similar combination containers (71, 72; 271-273) are connected in parallel to each other and their control devices (S) are designed for a cyclically alternating execution of the partial processes.

20. A device according to claim 19, characterised in that three combination containers (271-273) for the cyclically alternating execution of the three first partial processes are connected parallel to each other and lie in series with a container (274) for the cooling partial process.

21. A device according to claim 19, characterised in that two combination containers (71, 72) for the alternating execution of the two first partial processes are connected in parallel to each other and lie in series with the series connection of a container (73) for the conversion partial process and a container (74) for the cooling partial process.

22. A device according to claim 19, characterised in that two series connections, which each have a combination container (171, 172) for the two first partial processes and a combination container (173, 174) for the conversion partial process and the cooling partial process, lie parallel to each other.

23. A device according to one of claims 13 to 22, characterised in that the mixing device (82) has a worm (81), the rotational axis of which is inclined to the central axis (83) of the container (71) and rotates on a conical face, which is adapted to a conical part (80) of the container (71).

24. A device according to one of claims 13 to 23, characterised in that the volume of the container (73; 173), which serves the conversion, and/or the volume of the container (74; 174; 274), which serves the cooling, is smaller than the volume of a container connected therebefore.

25. A device according to one of claims 13 to 24, characterised by connection lines, which deliver the heat transfer medium exiting from the heating device (e.g. 61) of a container of a higher temperature, to the heating device (e.g. 59) of a container of a lower temperature.

26. A device according to claims 13 to 25, characterised in that a tank (30) accommodates the gases which do not liquefy, forming in the container (1; 53; 73; 173, 174; 271-273) serving the conversion and has at least one removal opening (32; 37) for removing gas for operating the device.

27. A device according to claim 26, characterised in that a removal opening (37) for inert gas is able to be connected to a container (2), in order to be able to expel completely free oxygen, which enters when emptying said container.

28. A device according to claim 26 or 27, characterised in that a removal opening (32) for combustible gas is able to be connected to a burner (13) for direct or indirect heating of the container with the highest temperature.

29. A device according to one of claims 26 to 28, characterised in that a removal opening (37) for gas is able to be connected with a jet apparatus (35) by way of a condenser (36), said apparatus serving as exhaust pump for at least one container.

30. A device according to one of claims 13 to 29, characterised by a grinder (57) for crushing the dried material at the input of the container (53), which serves the conversion.

31. A device according to one of claims 13 to 30, characterised in that the containers, control devices (S) and other fittings of the device are mounted on a movable frame (107).

32. A device according to one of claims 13 to 31, characterised in that containers (171, 172; 271-273) are provided with two heating devices (110, 111, 175, 176; 210, 275).

33. A device according to one of claims 13 to 32, characterised by a steam jet vacuum pump (95) for exhausting by suction of steam from a container (71, 72; 171, 172; 271-273), by a container heating device (75, 76; 175, 176; 275) able to be supplied with this steam, which is provided with a condensate drain and a steam outlet (98), by a steam jet condenser (91) connected to the steam outlet, and by a steam boiler (86) provided with condensate as driving steam generator, which supplies the steam jet condenser (91) and the steam jet vacuum pump (95).

34. A device according to one of claims 13 to 33, characterised by a circuit with a heating device (84) having a burner (13) for a liquid heat transfer medium, with a heating device (116; 210) for a container (173;273) effecting the conversion, with a heating device (111; 210) of a further container (172; 271, 272) and the cooling device (117, 279) of the container (174; 274) serving the cooling.

**35.** A device according to one of claims 13 to 34, characterised by a steam superheater (87), in which the heated heat transfer medium overheats the sucked off steam.

**36.** A device according to one of claims 13 to 35, characterised in that connected to the container there is a line (22) with low pressure.

**Revendications**

**1.** Procédé pour le traitement de déchets par chauffage notamment pour l'obtention de combustibles à partir de matières organiques qui sont chauffées pour la formation du charbon et de produits de réaction gazeux, partiellement liquéfiables par refroidissement à une température de conversion protégée de l'air entre 200°C et 600°C, les matériaux passant par plusieurs procédés partiels dont un premier procédé partiel concerne le réchauffage, un second procédé partiel concerne le séchage et un troisième procédé partiel concerne la conversion des matériaux, les procédés partiels devant se dérouler consécutivement étant réalisés simultanément dans des chambres séparées entre elles avec des paramètres de traitement spécifiques aux procédés partiels tels que la température, la pression ou la vitesse de mélange et la pression de service étant maintenue dans le premier procédé partiel au-dessus de la pression d'évaporation et dans le second procédé partiel au-dessous de la pression d'évaporation pour la température de matériaux correspondants.

**2.** Procédé selon la revendication 1, caractérisé en ce qu'au moins un paramètre de traitement est modifié pendant au moins un procédé partiel.

**3.** Procédé selon la revendication 1 ou 2, caractérisé en ce que les paramètres de traitement pour le procédé partiel, procédé partiel dans lequel le matériau doit absorber la plus grande quantité de chaleur, sont sélectionnés de telle manière que la durée du procédé partiel se situe dans le domaine du minimum.

**4.** Procédé selon l'une des revendications 1 à 3, caractérisé en ce que les paramètres de traitement sont sélectionnés de telle manière que la durée de séjour nécessaire pour une charge dans chacun des procédés partiels est approximativement égale.

**5.** Procédé selon l'une des revendications 1 à 4, caractérisé en ce que le matériau dans un premier procédé partiel se trouvant sous une pression de service légèrement au-dessus de la pression atmosphérique est chauffé à une température légèrement au-dessus de 100°C et dans un second procédé partiel à une pression de service au-dessous de la pression atmosphérique est maintenu à une température dans une plage de 100°C.

**6.** Procédé selon l'une des revendications 1 à 5, caractérisé en ce que le chauffage dans au moins un procédé partiel s'effectue en utilisant la vapeur d'eau récupérée du procédé partiel de séchage.

**7.** Procédé selon l'une des revendications 1 à 6, caractérisé en ce que les gaz combustibles obtenus à partir du procédé partiel de conversion sont brulés et le chauffage dans le procédé partiel de conversion s'effectue en utilisant la chaleur de combustion.

**8.** Procédé selon la revendication 7, caractérisé en ce qu'un agent caloporteur est chauffé par la chaleur de combustion et cet agent caloporteur, consécutivement à l'émission de chaleur dans le procédé partiel de conversion, chauffe le matériau dans au moins une étape partielle en amont et/ou surchauffe la vapeur d'eau.

**9.** Procédé selon l'une des revendications 1 à 8, caractérisé en ce qu'au procédé partiel de conversion est consécutif à un procédé partiel de refroidissement dans lequel le charbon est refroidi sous exclusion d'air à une température située au-dessous de la température d'inflammation.

**10.** Procédé selon la revendication 9, caractérisé en ce que le refroidissement dans le procédé partiel de refroidissement s'effectue au moyen d'un agent caloporteur qui a préalablement chauffé le matériau dans un premier procédé partiel.

**11.** Procédé selon l'une des revendications 1 à 10, caractérisé en ce que le gaz inerte obtenu à partir de l'opération partielle de conversion est utilisé dans ou moins une opération partielle pour réaliser celle-ci à l'abri de l'oxygène.

**12.** Procédé selon l'une des revendications 1 à 11, caractérisé en ce qu'au moins deux opérations partielles consécutives sont effectuées dans la même chambre, le passage ou transition s'effectuant par permutation des paramètres de traitement.

**13.** Procédé pour le traitement de déchets par chauffage, notamment pour la réalisation du procédé selon l'une des revendications 1 à 12, avec au moins deux récipients (1, 2; 51-54; 71-74; 171-174; 271-274), munis d'ouvertures de remplissage et de vidange (3, 4) verrouillables, qui sont conçus pour la réalisation simultanée des différentes opérations partielles, au moins les récipients servant au chauffage (1, 2; 51-53; 71-74; 171-174; 271-273) sont réalisés sous forme conique et avec un diamètre allant en s'amenuisant vers le bas et la partie conique (16) est munie vers l'extérieur d'un dispositif de chauffage (8; 58, 59, 61; 75, 76, 78; 110, 111, 116, 117, 175, 176; 210, 275) et vers l'intérieur d'un dispositif de mélange (17, 17a; 82) rotatif autour de son axe central.

**14.** Dispositif selon la revendication 13, caractérisé en ce qu'au moins deux récipients (1, 2; 51-54; 71, 73, 74; 72-74; 171, 173; 172, 174; 271, 274, 272, 274; 273; 274) sont montés en série.

**15.** Dispositif selon la revendication 14, caractérisé en ce que l'ouverture de vidange (3) d'un récipient supérieur (1) se trouve au-dessus de l'ouverture de remplissage (4) du récipient suivant (2).

**16.** Dispositif selon l'une des revendications 13 à 15, caractérisé en ce qu'il est prévu quatre récipients (51-54; 71-74; 171-174; 271-274) destinés aux quatre opérations partielles à savoir le réchauffage ou le préséchage, le séchage, la conversion et le refroidissement.

**17.** Dispositif selon la revendication 16, caractérisé en ce que les quatre récipients sont montés en série.

**18.** Dispositif selon l'une des revendications 13 à 15, caractérisé en ce qu'il est prévu au moins un récipient combiné (71, 72; 171-174; 271-273) pour la réalisation d'au moins deux opérations partielles, récipient combiné auquel sont affectés des dispositifs de commande (S) pour la modification de la température de chauffage et/ou de la pression de service et/ou de la vitesse de mélange.

**19.** Dispositif selon la revendication 18, caractérisé en ce que plusieurs récipients combinés analogues (71, 72; 271-273) sont montés parallèlement entre eux et leurs dispositifs de commande (S) sont conçus pour une réalisation cycliquement alternée des opérations partielles.

**20.** Dispositif selon la revendication 19, caractérisé en ce que trois récipients combinés (271-273) sont montés de façon parallèle pour la réalisation cycliquement alternée des trois premières opérations partielles et se situent en série avec un récipient (274) pour l'opération partielle de refroidissement.

**21.** Dispositif selon la revendication 19, caractérisé en ce que deux récipients combinés (71, 72) sont montés parallèlement entre eux pour la réalisation alternée des deux premières opérations partielles et se situent en série avec le montage en série d'un récipient (73) pour l'opération partielle de conversion et d'un récipient (74) pour l'opération partielle de refroidissement.

**22.** Dispositif selon la revendication 19, caractérisé en ce que deux montages en série qui comportent chacun un récipient combiné (171, 172) pour les deux premières opérations partielles et un récipient combiné (173, 174) pour l'opération partielle de conversion et l'opération partielle de refroidissement sont disposés parallèlement entre eux.

**23.** Dispositif selon l'une des revendications 13 à 22, caractérisé en ce que le dispositif de mélange (82) comporte une vis sans fin (81) dont l'axe de rotation par rapport à l'axe médian (83) du récipient (71) est incliné et passe sur une surface conique qui est adaptée à la surface conique (80) du récipient (71).

**24.** Dispositif selon l'une des revendications 13 à 23, caractérisé en ce que le volume du récipient (73; 173) qui sert à la conversion et/ou du récipient (74; 174; 274) qui sert au refroidissement est plus petit que le volume d'un récipient monté en amont.

**25.** Dispositif selon l'une des revendications 13 à 24, caractérisé par des conduites de liaison qui amènent l'agent caloporteur sortant du dispositif de chauffage (par exemple 61) d'un récipient à température élevée au dispositif de chauffage (par exemple 59) d'un récipient à température moins élevée.

**26.** Dispositif selon l'une des revendications 13 à 25, caractérisé en ce qu'un réservoir (30) qui absorbe les gaz non liquéfiables provenant du récipient(1; 53; 73; 173, 174; 271-273) servant à la conversion et possède au moins une ouverture de prélèvement (32; 37) pour le prélèvement des gaz destinés au fonctionnement du dispositif.

27. Dispositif selon la revendication 26, caractérisé en ce qu'une ouverture de prélèvement (37) pour le gaz inerte peut être reliée à un récipient (2) pour refouler complètement l'oxygène libre parvenu à l'intérieur lors de sa vidange.

28. Dispositif selon la revendication 26 ou 27, caractérisé en ce qu'une ouverture de prélèvement (32) pour le gaz combustible peut être reliée à un brûleur (13) pour le chauffage direct ou indirect du récipient ayant la température la plus élevée.

29. Dispositif selon l'une des revendications 26 à 28, caractérisé en ce qu'une ouverture de prélèvement (37) pour le gaz peut être reliée à un appareil à jet (35) par l'intermédiaire d'un compresseur (36), appareil à jet qui sert de pompe d'aspiration pour au moins un récipient.

30. Dispositif selon l'une des revendications 13 à 29, caractérisé en ce qu'un dispositif de broyage sert au concassage de la matière séchée à l'entrée du récipient (53) qui sert à la conversion.

31. Dispositif selon l'une des revendications 13 à 30, caractérisé en ce que les récipients, dispositifs de commande (S) et autres accessoires de tuyauterie du dispositif sont montés sur un châssis mobile (107).

32. Dispositif selon l'une des revendications 13 à 31, caractérisé en ce que les récipients (171, 172; 271-273) sont munis de deux dispositifs de chauffage (110, 111, 175, 176; 210, 275).

33. Dispositif selon l'une des revendications 13 à 32, caractérisé en ce qu'une pompe de vide à jet de vapeur (95) destinée à l'aspiration de la vapeur d'eau à partir d'un récipient (71, 72; 171, 172; 271-273), par un dispositif de chauffage de récipients pouvant être approvisionné en cette vapeur, dispositif de chauffage muni d'une évacuation de condensat et d'une purge de vapeur (98), par un compresseur à jet de vapeur (91) raccordé à la purge de vapeur et par une chaudière à vapeur (86) approvisionnée en condensat servant de générateur à flux de vapeur qui alimente le compresseur à jet de vapeur (91) et la pompe de vide à jet de vapeur (95).

34. Dispositif selon l'une des revendications 13 à 33, caractérisé par un circuit comportant un dispositif de réchauffage (84) avec un brûleur (13) pour un agent caloporteur liquide, un dispositif de chauffage (116; 210) pour un récipient servant à la conversion (173; 273), un dispositif de chauffage (111; 210) d'un autre récipient (172; 271, 272) et du dispositif de refroidissement (117, 279) du récipient servant au refroidissement (174; 274).

35. Dispositif selon l'une des revendications 13 à 34, caractérisé par un surchauffeur de vapeur (87) dans lequel l'agent caloporteur réchauffé surchauffe la vapeur d'eau aspirée.

36. Dispositif selon l'une des revendications 13 à 35, caractérisé en ce qu'une conduite (22) amenant une souspression est raccordée au récipient.

F i g.1

EP 0 329 820 B1

18

# Fig.2

Fig. 3

EP 0 329 820 B1

Fig.4

# Fig.5

EP 0 329 820 B1